# EUROPÄISCHE PATENTSCHRIFT

(11) **EP 3 086 094 B1**
(45) Veröffentlichungstag und Bekanntmachung des Hinweises auf die Patenterteilung: **18.10.2017**
(21) Anmeldenummer: 15164311.1
(22) Anmeldetag: 20.04.2015
(51) Int. Cl.: G01D 5/14, G06F 3/0338, G05G 9/047, G05G 1/04, G05G 5/02

(54) **HANDSTEUERGEBER, STEUER- UND BEDIENEINHEIT MIT EINEM HANDSTEUERGEBER UND ARBEITSMASCHINE ODER BAUMASCHINE**
MANUAL CONTROLLER, CONTROL AND OPERATING UNIT WITH A MANUAL CONTROLLER AND WORK MACHINE OR CONSTRUCTION MACHINE
ÉMETTEUR DE COMMANDE MANUELLE, UNITÉ DE COMMANDE DOTÉ D'UN ÉMETTEUR DE COMMANDE MANUELLE ET MACHINE DE TRAVAIL OU ENGIN

(43) Veröffentlichungstag der Anmeldung: 26.10.2016
(73) Patentinhaber: MOBA Mobile Automation AG, 65555 Limburg-Offheim (DE)
(72) Erfinder: Zils, Boris, 65555 Limburg (DE); Kühr, Thomas, 65555 Limburg (DE); Trost, Karl-Friedrich, 65555 Limburg (DE)
(74) Vertreter: Zimmermann, Tankred Klaus

(56) Entgegenhaltungen:
- EP-A1- 1 808 738
- DE-A1- 19 948 557
- DE-U1-202012 006 199
- GB-A- 2 341 664
- US-A1- 2008 278 448
- US-A1- 2009 084 214
- US-A1- 2014 251 070
- US-B1- 6 606 085

## Beschreibung

Die vorliegende Erfindung bezieht sich auf einen Handsteuergeber für eine Steuer- und Bedieneinheit, welche im Bereich von Arbeitsmaschinen, beispielsweise mobilen Arbeitsmaschinen, oder Baumaschinen eingesetzt wird.

Derartige Handsteuergeber werden als Steuer- und Bedieneinheiten an mobilen Arbeitsmaschinen oder Baumaschinen, beispielsweise zum Verfahren eines Arbeitskorbes einer Hubarbeitsbühne oder zum Verstellen eines Arbeitswerkzeugs einer Baumaschine verwendet. Dabei sind die Handsteuergeber sowie die Steuer- und Bedieneinheiten selbst in der Regel widrigsten Umweltbedingungen ausgesetzt, beispielsweise Regen, Staub und extremen Temperaturen.

Die DE 20 2010 004 128 U1 beschreibt einen Handsteuergeber mit einer getrennten Betätigung und Auswertung, der sich im Wesentlichen aus einem mechanischen Teil und einem elektrischen Teil zusammensetzt. Zwischen dem mechanischen Teil und dem elektrischen Teil ist als Trennschicht und als Befestigungsschicht für die mechanischen Teile eine magnetisch durchlässige Platte vorgesehen, beispielsweise eine Leiterplatte. Der elektrische bzw. elektronische Teil des Handsteuergebers wird durch einen oder mehrere auf der Unterseite der Platte angeordnete Sensoren, beispielsweise Magnetfeld-sensoren, gebildet. Den mechanischen Teil bildet ein auf der Oberseite der Trägerplatte lösbar angeordneter Hebelmechanismus mit einem daran angeordneten Magneten, welcher als Einheit im Reparaturfall ausgewechselt werden kann.

Die DE 103 04 595 B3 beschreibt eine Schaltvorrichtung mit wenigstens einem beweglichen Betätigungselement, welches einen Magneten aufweist, und mit wenigstens einem Sensorelement zum Detektieren der Position und/oder der Bewegung des Betätigungselements. Das Betätigungselement und das Sensorelement sind in jeder Stellung voneinander beabstandet, wobei das Sensorelement in oder an einem Gehäuse angeordnet ist. Das Betätigungselement ist Teil einer Betätigungseinheit, welche lösbar an dem Gehäuse befestigt ist. Das Betätigungselement ist dabei ein entlang mindestens einer Achse schwenkbarer Joystick, dessen unteres Ende einen Magneten trägt. Auf einer Platine in dem Gehäuse oder an dem Gehäuse unterhalb des Schwenkbereichs des Magneten sind mehrere Sensorelemente angeordnet, um eine Position/Auslenkung des Joysticks zu erkennen.

Die im Stand der Technik bekannten Handsteuergeber mit entsprechenden Betätigungselementen, beispielsweise in Form von Joysticks, ermöglichen eine Bewegung in einer Bewegungsebene, beispielsweise der x/y-Ebene. Die Erfassung der Bewegung erfolgt hier, wie oben erwähnt, unter Verwendung von Sensoren, beispielsweise Magnetfeld-sensoren, die eine Positionsveränderung des Magneten innerhalb der Bewegungsebene erfassen. Auf Grundlage der Sensorsignale kann beispielsweise durch eine Steuerung ein entsprechendes Positionssignal erzeugt werden. Weiterhin sind Handsteuergeber der oben beschriebenen Art bekannt, die eine Bewegung senkrecht zur Bewegungsebene, beispielsweise eine Bewegung in z-Richtung oder eine vertikale Bewegung zulassen. Bei solchen Handsteuergebern ist für die Erfassung der weiteren Bewegungsrichtung ein zusätzliches Sensorelement erforderlich, beispielsweise in Form eines Potentiometers oder eines Schaltkontaktes, welches eine vertikale Bewegung des Betätigungselements des Handsteuergebers detektiert. Zusätzlich zu den Signalen zum Detektieren einer Bewegung in x/y-Ebene ist ein weiteres Signal von einem separaten Sensorelement notwendig.

Die gerade beschriebene Ausgestaltung von Handsteuergebern mit einer Möglichkeit einer vertikalen Betätigung des Joysticks ist dahingehend nachteilhaft, dass für die Erfassung der vertikalen Bewegung zusätzliche Sensorik erforderlich ist, die neben dem Erfordernis der Bereitstellung eines zusätzlichen Sensors auch den Aufbau des Handsteuergebers aufgrund des zusätzlichen Platzbedarfs erschwert. Dieser zusätzliche Sensor ist ferner im Bereich der Betätigungseinheit angeordnet, also anders als die Magentfeldsensoren nicht geschützt unterhalb der Platte und somit den gleichen Umweltbedingungen ausgesetzt, wie das Betätigungselement. Dies führt zu einer reduzierten Lebensdauer der Betätigungseinheit oder zum Erfordernis den Sensor zu schützen oder einen hochwertigeren Sensor einzusetzen. Die Kosten der regelmäßig auszutauschenden Betätigungseinheit werden hierdurch erhöht. Ferner ist es erforderlich, die Signale der verschiedenen, unterschiedlichen Sensoren in einer Steuerung auszuwerten, was eine entsprechende Ausgestaltung der Steuerung erfordert, um die Signale der unterschiedlichen Sensoren zu verarbeiten.

Die DE 20 2012 006 199 U1 zeigt einen Joystick gemäß dem Oberbegriff des Patentanspruchs 1. Weitere Ausgestaltungen von Joysticks sind in der US 2009/0084214 A1, der US 2008/027848 A1 und der US 6,606,085 B1 beschreiben.

Ausgehend von diesem Stand der Technik liegt der vorliegenden Erfindung die Aufgabe zugrunde, einen Handsteuergeber für Steuer- und Bedieneinheiten von Arbeitsmaschinen oder Baumaschinen weiterzubilden, so dass auf einfache und kostengünstige Art und Weise eine Betätigung des Betätigungselements in einer vertikalen oder z-Richtung detektiert werden kann.

Diese Aufgabe wird durch die Merkmale der unabhängigen Patentansprüche gelöst. Bevorzugte Ausführungen der Erfindung sind Bestandteil der abhängigen Ansprüche.

Die vorliegende Erfindung schafft einen Handsteuergeber für eine Steuer- und Bedieneinheit einer Arbeitsmaschine oder Baumaschine, mit:
zumindest einer Betätigungseinheit, die ein Betätigungselement umfasst, das zumindest ein magnetisches Positionselement aufweist; und
einer Auswerteeinheit, die zumindest eine Magnetfeld-Sensoreinheit umfasst,
wobei die Auswerteeinheit ausgebildet ist, um basierend auf einem Sensorsignal von der Magnetfeld-Sensoreinheit eine Position und/oder eine Bewegung des Betätigungselements in einer Bewegungsebene zu detektieren,
wobei das Betätigungselement in Bezug zu der Sensoreinheit entlang einer weiteren Bewegungsrichtung senkrecht zu der Bewegungsebene bewegbar ist,
wobei die Auswerteeinheit ausgebildet ist, um eine Bewegung des Betätigungselements entlang der weiteren Bewegungsrichtung basierend auf einem Sensorsignal von der Magnetfeld-Sensoreinheit zu detektieren,
wobei das Betätigungselement zwischen einer ersten Stellung, in der die Bewegung entlang der weiteren Bewegungsrichtung ermöglicht ist, und einer zweiten Stellung, in der die Bewegung entlang der weiteren Bewegungsrichtung nicht möglich ist, umschaltbar ist, und
wobei die Auswerteeinheit ausgebildet ist, um basierend auf einem Sensorsignal von der Magnetfeld-Sensoreinheit die erste Stellung oder die zweite Stellung des Betätigungselements zu detektieren.

Der erfindungsgemäße Ansatz ist gegenüber den im Stand der Technik bekannten Ansätzen vorteilhaft, da es nicht erforderlich ist, für die Erfassung der zusätzlichen Bewegung des Betätigungselements, beispielsweise in der vertikalen Richtung oder z-Richtung, ein zusätzliches Sensorelement vorzusehen. Erfindungsgemäß wurde erkannt, dass eine Bewegung in der vertikalen Richtung oder z-Richtung durch die bereits existierenden Sensorsignale erfasst werden kann, da eine Bewegung des Betätigungselements, welches das magnetische Positionselement aufweist, in einer z-Richtung zu einer Änderung des Magnetfelds führt, genauer gesagt zu einer Änderung der Intensität des erfassten Magnetfelds und damit zu einer Änderung der Intensität des durch den Sensor ausgegebenen Signals. Diese Änderung der Intensität wird erfindungsgemäß genutzt, um eine Position des Betätigungselements entlang der z-Achse zu detektieren. Diese Vorgehensweise hat den weiteren Vorteil, dass die für die Auswertung erforderliche Steuereinheit oder Auswerteeinheit lediglich die von dem Magnetfeld-Sensor ohnehin erhaltenen Signale auswerten muss, also kein zusätzlicher Schaltungsaufwand im Hinblick auf die Auswertung von Signalen von anderen Sensoren erforderlich ist. Die eigentliche Auswertung ist ferner dahingehend vorteilhaft, dass sie auf einfache Art und Weise zu implementieren ist, da lediglich die Intensität der ohnehin vorhandenen Signale überprüft wird, was durch einen schaltungstechnisch geringen Aufwand möglich ist, so dass auf einfache Art und Weise aus den ohnehin anliegenden Signalen gleichzeitig die Signale erzeugt werden können, welche eine Auslenkung des Betätigungselements in die z-Richtung anzeigen. Ferner sind alle Elemente der Positionserfassung in der Auswerteeinheit angeordnet und damit vor den Umgebungseinflüssen geschützt.

Gemäß Ausführungsbeispielen kann vorgesehen sein, dass die Abstände des nicht-ausgelenkten magnetischen Positionselements des Betätigungselements von der Magnetfeld-Sensoreinheit in der ersten Stellung des Betätigungselements und in der zweiten Stellung des Betätigungselements unterschiedlich sind.

Gemäß einer bevorzugten Ausführungsform ist vorgesehen, dass der Handsteuergeber eine Adapterplatte und eine Gegenhalterplatte aufweist, von denen eine in dem Handsteuergeber montiert ist, abhängig davon, ob das Betätigungselement in der ersten Stellung oder in der zweiten Stellung ist, wobei in der zweiten Stellung des Betätigungselements die Gegenhalterplatte in dem Handsteuergeber montiert ist, um eine Bewegung des Betätigungselements aus der zweiten Stellung zu verhindern, und wobei in der ersten Stellung des Betätigungselements die Adapterplatte in dem Handsteuergeber derart montiert ist, dass der Abstand des nicht-ausgelenkten magnetischen Positionselements des Betätigungselements von der Magnetfeld-Sensoreinheit größer ist als der Abstand bei montierter Gegenhalterplatte.

Gemäß einer anderen Ausführungsform ist vorgesehen, dass der Handsteuergeber eine in dem Betätigungselement integrierte mechanische Arretierung aufweist, die ausgebildet ist, um das Betätigungselement in der zweiten Stellung zu arretieren, und um das Betätigungselement in der ersten Stellung freizugeben, derart, dass die Abstände des nicht-ausgelenkten magnetischen Positionselements des Betätigungselements von der Magnetfeld-Sensoreinheit in der ersten Stellung des Betätigungselements und in der zweiten Stellung des Betätigungselements unterschiedlich sind.

Die oben beschriebenen Ausführungsformen betreffend die unterschiedlichen Stellungen des Betätigungselements zum Zulassen/Verhindern einer Bewegung in die weitere Bewegungsrichtung (z-Richtung oder vertikale Richtung) sind vorteilhaft, da der erfindungsgemäße Handsteuergeber die Möglichkeit eröffnet, in Situationen eingesetzt werden zu können, in denen eine Bewegung in der z-Richtung erwünscht ist, aber ebenso bei Anwendungen, bei denen eine solche Bewegung in z-Richtung nicht erwünscht oder erforderlich ist. In beiden Fällen bedarf es lediglich der Montage des Handsteuergebers. Weitere Schritte, insbesondere im Hinblick auf die Auswerteeinheit, sind nicht erforderlich. Vielmehr ist die Auswerteeinheit erfindungsgemäß ausgelegt, um die erwünschte Funktionalität des montierten Handsteuergebers zu erkennen, nämlich um zu erkennen, ob dieser eine Betätigung in der z-Richtung ermöglicht oder nicht. Dies erfolgt basierend auf den Signalen, die durch die Sensoreinheit erfasst werden, genauer gesagt durch eine Überwachung der Intensität der erfassten Signale, die sich aufgrund der unterschiedlichen Abstände, in denen sich das magnetische Positionselement von dem Sensor bei den unterschiedlichen Stellungen befindet, eindeutig erkannt werden können. Somit ist keine Modifizierung der Auswerteeinheit erforderlich, mit der das Betätigungselement betrieben wird, da die Auswerteeinheit aufgrund der durch die Magnetfeld-Sensoreinheit erfassten Signale automatisch erkennt, ob die aktuell montierte Betätigungseinheit des Handsteuergebers eine Bewegung in z-Richtung zulässt oder nicht.

Gemäß weiteren Ausführungsbeispielen schafft die vorliegende Erfindung einen Handsteuergeber, bei dem die Betätigungseinheit eine manuell entriegelbare Arretierungsvorrichtung aufweist, welche im nicht-betätigten Zustand ein Bewegen des Betätigungselements verhindert.

Gemäß Ausführungsbeispielen umfasst der Handsteuergeber eine Führung, die mit der manuell entriegelbaren Arretierungsvorrichtung zusammenwirkt und die im betätigten Zustand der manuell entriegelbaren Arretierungsvorrichtung bezüglich des Betätigungselements bewegbar ist, wobei die manuell entriegelbare Arretierungsvorrichtung Folgendes umfasst:
einen Stab mit einem verjüngten, unteren Ende, das im Bereich der Führung angeordnet ist, wobei der Stab in einem in der Führung aufgenommenen Führungsrohr des Betätigungselements beweglich angeordnet ist, und
eine oder mehrere Kugeln, die zwischen der Innenwand der Führung und dem Stab angeordnet sind, wobei die Innenwand der Führung eine oder mehrere Aussparungen zur teilweisen Aufnahme der Kugeln aufweist, und wobei das Führungsrohr eine oder mehrere Löcher zur teilweisen Aufnahme der Kugeln aufweist.

Vorzugsweise ist die manuell entriegelbare Arretierungsvorrichtung wirksam, so dass in deren nicht-betätigten Zustand der nicht-verjüngte Teil des Stabes im Bereich der Löcher angeordnet ist, so dass eine Kugel teilweise in einem Loch angeordnet ist und sich in eine Aussparung in der Führung erstreckt, so dass eine Bewegung der Führung und damit des Betätigungselements nicht möglich ist. Im betätigten Zustand der manuell entriegelbaren Arretierungsvorrichtung ist der verjüngte Teil des Stabes im Bereich der Löcher angeordnet, so dass eine Kugel teilweise in einem Loch angeordnet ist und sich in das Führungsrohr erstreckt, so dass eine Bewegung der Führung und damit des Betätigungselements möglich ist.

Die Arretierungsvorrichtung gemäß den oben erwähnten Ausführungsbeispielen ist vorteilhaft, da eine unerwünschte Betätigung bzw. Auslenkung des Betätigungselements der Betätigungseinheit vermieden werden kann, beispielsweise durch eine unbeabsichtigte Berührung während der Durchführung von Arbeiten auf einer Hubarbeitsbühne, die mit dem erfindungsgemäßen Handsteuergeber ausgestattet ist. Die erfindungsgemäße Ausführung der manuell entriegelbaren Arretierungsvorrichtung ist vorteilhaft, da keine externen Elemente bereitgestellt werden, vielmehr wird eine innerhalb der Struktur angeordnete Mechanik vorgesehen, die durch ein einfache Handhabung mit nur einer Hand betätigt werden kann, so dass auf einfache Art und Weise die Arretierung aufgelöst wird. Vorteilhafterweise ist vorgesehen, dass die Arretierung in die arretierte Stellung vorgespannt ist, so dass beim Loslassen der Arretierungsvorrichtung und beim Zurückkehren des Betätigungselements in den Nullzustand ein automatisches Verriegeln durchgeführt wird. Diese Ausführung ist vorteilhaft, da hierdurch sichergestellt wird, dass bei Nicht-Betätigung des Betätigungselements dieses automatisch in den Nullzustand zurückgeführt wird und dort verriegelt wird, so dass bei einem Loslassen des Betätigungselements durch den Benutzer dieses stets in einen definierten Zustand zurückkehrt, ausgehend von dem dann eine weitere Betätigung der Arbeitsmaschine bzw. der Baumaschine, nach erneuter Entriegelung, durchgeführt werden kann.

Gemäß Ausführungsbeispielen schafft die vorliegende Erfindung einen Handsteuergeber mit einem Faltenbalg, wobei der Faltenbalg eine im Wesentlichen zylindrische Form aufweist.

Diese Ausführungsform ist gegenüber herkömmlichen Ausführungsformen eines Faltenbalgs vorteilhaft, da ein einfacher Austausch des Faltenbalgs ermöglicht wird. Herkömmliche Ansätze verwenden einen Faltenbalg, der im Wesentlichen kegelstumpfförmig ist und von einem unteren Ende in Richtung eines oberen Endes des Betätigungselements enger wird. Dies hat zur Folge, dass zum Austausch das Betätigungselement entfernt werden muss, so dass der Faltenbalg nach unten von diesem abgezogen werden kann. Wie oben bereits erwähnt wurde, ist das Betätigungselement den Umgebungsbedingungen ausgesetzt und daher einem erhöhten Verschleiß unterworfen. Das Betätigungselement umfasst den oben erwähnten Faltenbalg, der während einer Bewegung des Betätigungselements der Betätigungseinheit entsprechend bewegt wird, so dass dieses Bauteil einer noch stärkeren Beanspruchung unterworfen ist, als die anderen Bauteile der Betätigungseinheit und daher öfter ausgetauscht werden muss als die gesamte Betätigungseinheit. Ferner handelt es sich bei dem Material des Faltenbalgs im Regelfall um ein elastisches Material, welches aufgrund der Umgebungsbedingen, wie beispielsweise Regen, Sonneneinstrahlung, Temperaturänderungen, einem verstärkten Verschleiß unterworfen ist, der dazu führen kann, dass das Material spröde und damit brüchig werden kann, was dann den Austausch erfordert. Wie erwähnt, erfordern herkömmliche Ansätze den Ausbau des Betätigungselements oder der gesamten Betätigungseinheit, um den Faltenbalg abzuziehen. Erfindungsgemäß wird dieser Aufwand vermieden, indem der Faltenbalg im Wesentlichen zylindrisch ausgestaltet wird, genauer gesagt mit einer zylindrischen Form, so dass der obere Durchmesser des Faltenbalgs und der untere Durchmesser des Faltenbalgs größer sind als der Durchmesser des über den Faltenbalg hinausragenden Bauteils der Betätigungseinheit. Somit ist beim Austausch lediglich ein Lösen der entsprechenden Fixierungen des Faltenbalgs an den Elementen der Betätigungseinheit erforderlich und der Faltenbalg kann einfach nach oben abgezogen werden, ohne dass andere Teile der Betätigungseinheit demontiert werden müssten. Der neue Faltenbalg wird dann auf ähnliche Weise von oben über die Elemente der Betätigungseinheit gezogen und fixiert, so dass der Austausch, verglichen mit herkömmlichen Ansätzen, deutlich vereinfacht und weniger aufwendig ist.

Gemäß weiteren Ausführungsbeispielen schafft die vorliegende Erfindung einen Handsteuergeber, bei dem die Auswerteeinheit wasserdicht und/oder luftdicht ist, bei dem das zumindest eine magnetische Positionselement ein Dauermagnet ist, bei dem die Magnetfeld-Sensoreinheit zumindest ein Sensorelement umfasst, wobei das zumindest eine Sensorelement einen Halleffekt-Sensor, einen magnetoresistiver Sensor oder einen xMR-Sensor umfassen kann.

Ferner schafft die vorliegende Erfindung eine Steuer- und Bedieneinheit mit dem erfindungsgemäßen Handsteuergeber sowie eine Arbeitsmaschine oder eine Baumaschine mit der erfindungsgemäßen Steuer- und Bedieneinheit.

Nachfolgend werden unter Bezugnahme auf die beiliegenden Zeichnungen bevorzugte Ausführungsbeispiele der vorliegenden Erfindung näher erläutert. Es zeigen:
- Fig. 1: die Darstellung einer Hubarbeitsbühne mit einer Steuer- und Bedieneinheit, welche den erfindungsgemäßen Handsteuergeber aufweist;
- Fig. 2: eine detailliertere Darstellung der in Fig. 1 dargestellten Steuer- und Bedieneinheit;
- Fig. 3: eine isometrische Darstellung der Betätigungseinheit eines Handsteuergebers aus Fig. 1 und Fig. 2;
- Fig. 4: die Betätigungseinheit aus Fig. 3 in unterschiedlichen Darstellungen, wobei Fig. 4a eine seitliche Darstellung der Betätigungseinheit zeigt, wobei Fig. 4b eine Schnittdarstellung der Betätigungseinheit entlang der Linie A-A in Fig. 4a zeigt, und wobei Fig. 4c eine Draufsichtdarstellung auf die Betätigungseinheit von unten zeigt;
- Fig. 5: den erfindungsgemäßen Handsteuergeber gemäß einem bevorzugten Ausführungsbeispiel, wobei Fig. 5a eine weitere Schnittdarstellung der Betätigungseinheit mit einer verriegelten Arretierungsvorrichtung zeigt, wobei Fig. 5b eine Darstellung der Betätigungseinheit mit entriegeltem Arretierungselement und niedergedrücktem Betätigungselement zeigt, und wobei Fig. 5c eine Darstellung der Betätigungseinheit mit ausgelenktem Betätigungselement zeigt; und
- Fig. 6: eine weitere Ausführungsform des erfindungsgemäßen Handsteuergebers, dessen Betätigungselement bezüglich der Ruhe- oder Mittelposition ausgelenkt ist und bei dem anstelle einer Adapterplatte eine Gegenhalterplatte montiert ist.

Nachfolgend werden Ausführungsbeispiele der vorliegenden Erfindung unter Bezugnahme auf die beiliegenden Zeichnungen näher erläutert, wobei in den beiliegenden Zeichnungen gleiche oder gleichwirkende Elemente mit den gleichen Bezugszeichen versehen sind. Der Umfang der Erfindung ist durch die Patentansprüche bestimmt.

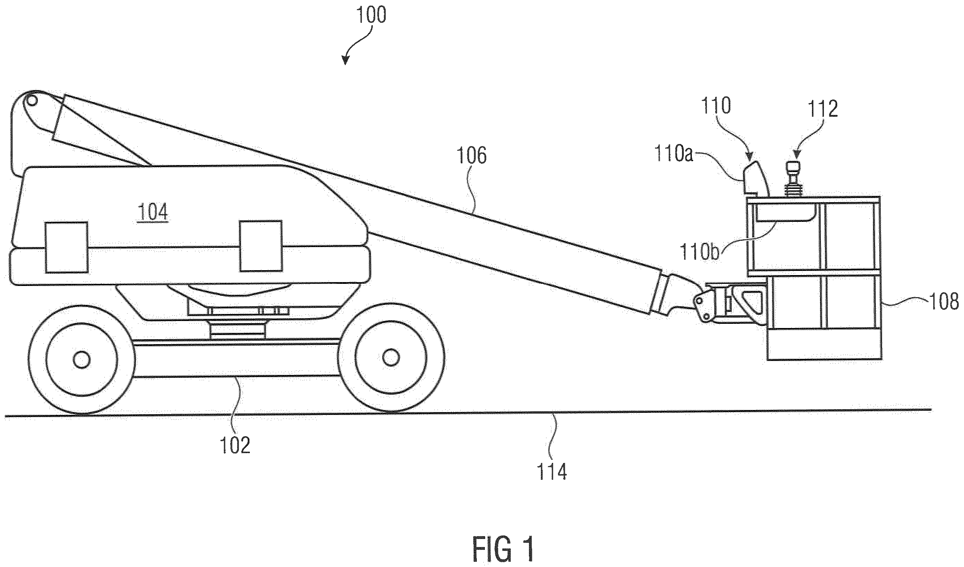

Fig. 1 zeigt die Darstellung einer Arbeitsmaschine bzw. einer Baumaschine mit einer Steuer- und Bedieneinheit, welche den erfindungsgemäßen Handsteuergeber aufweist. Fig. 1 zeigt eine Hubarbeitsbühne 100 mit einem fahrbaren Chassis 102 und einem drehbar auf dem Chassis 102 angeordneten Aufbau 104 der, neben den erforderlichen Motoren zur Bewegung der Hubarbeitsbühne 100, einen Kranmechanismus 106 aufweist, an dessen vorderem Ende eine Arbeitsbühne, z.B. ein Arbeitskorb 108, angeordnet ist. Der Arbeitskorb 108 umfasst eine Steuer- und Bedieneinheit 110, die ihrerseits ein erstes Gehäuseteil 110a, welches im Wesentlichen vertikal orientiert ist, und ein zweites Gehäuseteil 110b aufweist. Die Steuereinheit 110 umfasst ferner einen Handsteuergeber 112, der nachfolgend im Detail beschrieben wird. Über den Handsteuergeber 112 kann die Hubarbeitsbühne 110 derart gesteuert werden, dass der Arbeitskorb 108 abhängig von einer Bewegungsrichtung des Handsteuergebers 112 bezüglich dem Boden 114 angehoben oder abgesenkt wird. Ebenso wird durch eine entsprechende Betätigung des Handsteuergebers 112 eine Drehung der Hubarbeitsbühne 100 bewirkt.

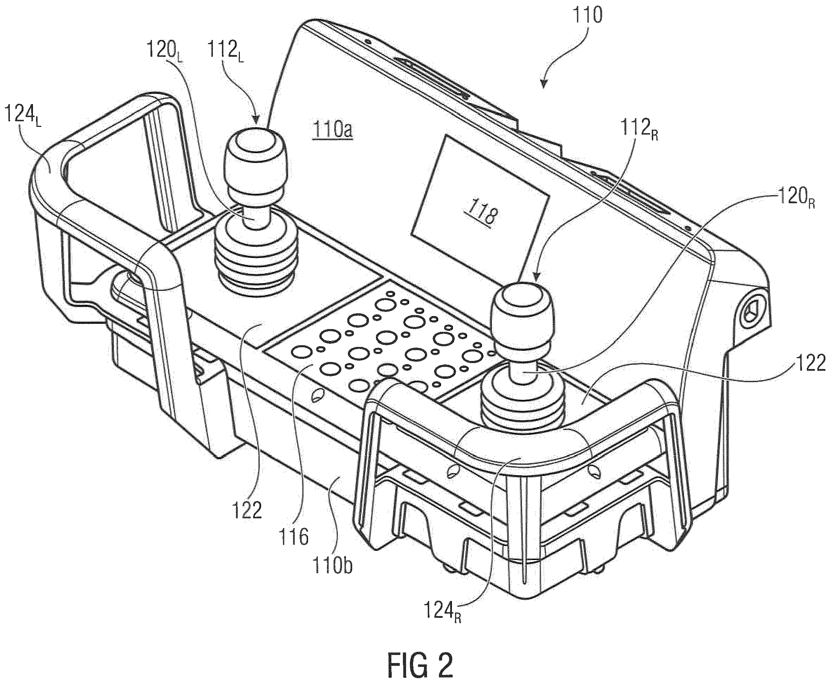

Fig. 2 zeigt eine Darstellung der anhand der Fig. 1 erwähnten Steuer- und Bedieneinheit 110. In den Gehäuseteilen 110a und 110b sind verschiedene Module angeordnet, über die ein Maschinenbediener Werkzeuge und/oder Vorgänge an der Maschine steuern bzw. kontrollieren kann. Zu diesen Modulen zählen beispielsweise ein oder mehrere Tastenfelder 116, die z.B. mit zusätzlichen LEDs (lichtemittierende Dioden) ausgerüstet sind, ein oder mehrere Anzeigeelemente 118 sowie, bei dem in Fig. 2 gezeigten Beispiel der Steuer- und Bedieneinheit 110, zwei Handsteuergeber, nämlich einen linken Handsteuergeber 112_{L} und einen rechten Handsteuergeber 112_{R}. Die zwei Handsteuergeber können vom Aufbau her identisch oder unterschiedlich sein. Hinsichtlich der Handsteuergeber 112 in Fig. 2 wird darauf hingewiesen, dass hier lediglich deren Betätigungseinheiten 120_{L} und 120_{R} dargestellt sind, die auf eine Frontplatte 122 der Steuer- und Bedieneinheit 110 montiert sind. Details der Handsteuergeber 112 werden nachfolgend unter Bezugnahme auf die weiteren Figuren erläutert. Ferner umfasst die Steuer- und Bedieneinheit 110 die in Fig. 2 dargestellten links- und rechtsseitigen Relings 124_{L} und 124_{R}, die vorgesehen sein können, um die Betätigungseinheiten 120_{L} und 120_{R} vor einer ungewollten Auslenkung zusätzlich zu schützen.

Details der anhand der Fig. 1 und 2 dargestellten Handsteuergeber werden nachfolgend näher erläutert.

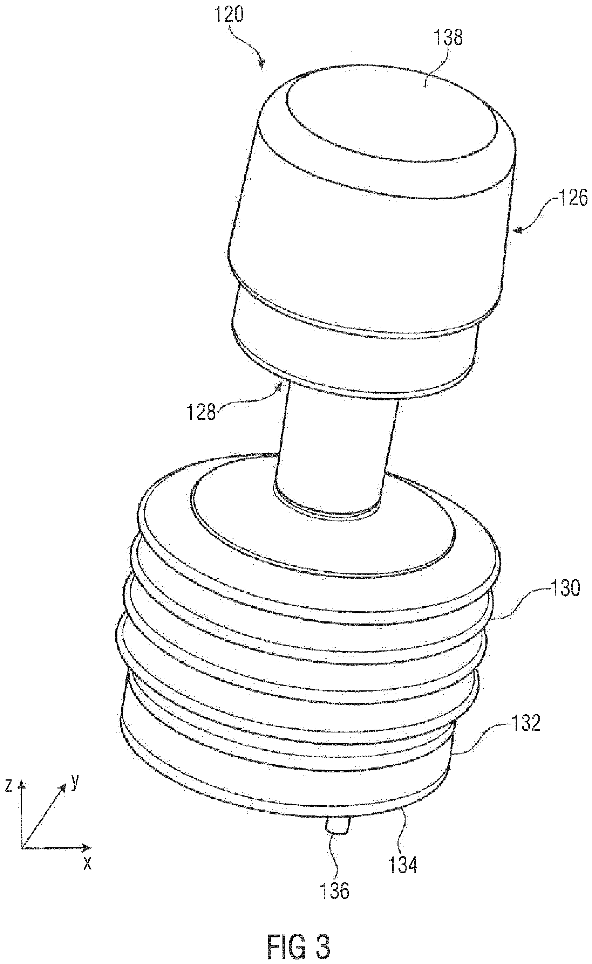

Fig. 3 zeigt eine isometrische Darstellung der Betätigungseinheit 120 eines Handsteuergebers 112, wie er anhand der Fig. 1 und 2 kurz erläutert wurde. Die Betätigungseinheit 120 umfasst ein Betätigungselement 126, eine manuell entriegelbare Arretierungsvorrichtung 128, einen Faltenbalg 130 zum Schutz der innenliegenden, in Fig. 3 nicht dargestellten Mechanik vor Umgebungseinflüssen, z.B. Regen, Staub, Schmutz, etc., eine Grundplatte 132, eine optional anbringbare Adapterplatte 134 sowie eine oder mehrere Befestigungsvorrichtungen 136. Das Betätigungselement 126 umfasst an seiner Oberseite einen Knauf 138, mittels dem ein Bediener das Betätigungselement 126 in einer Bewegungsebene, beispielsweise entlang der x- und y-Achsen des in Fig. 3 gezeigten Koordinatensystems bewegen kann. Erfindungsgemäß ist vorgesehen, dass das Betätigungselement 136 auch entlang einer weiteren Bewegungsrichtung senkrecht zur Bewegungsebene (x/y-Ebene), nämlich bei dem in Fig. 3 gezeigten Beispiel in der vertikalen Richtung oder entlang der z-Achse bewegt werden kann.

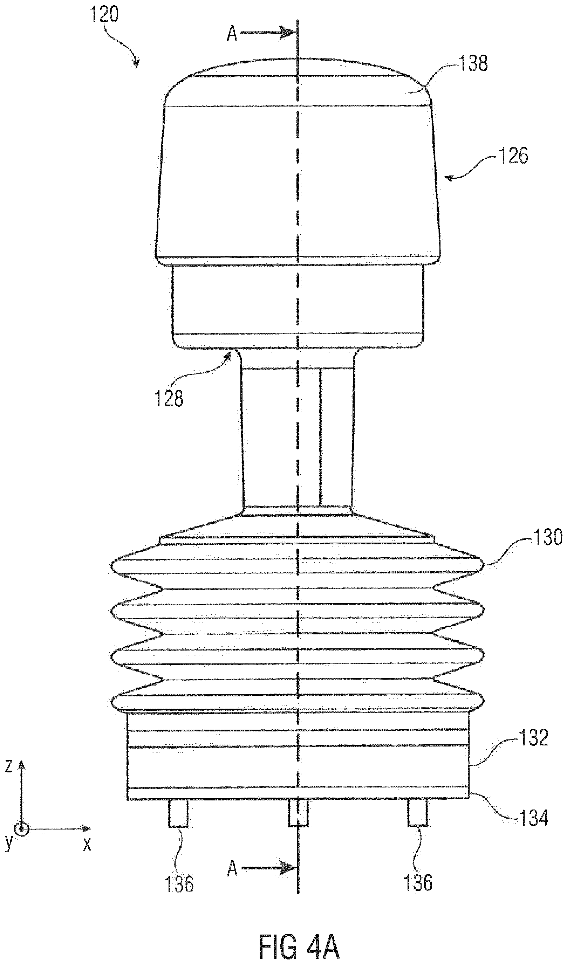

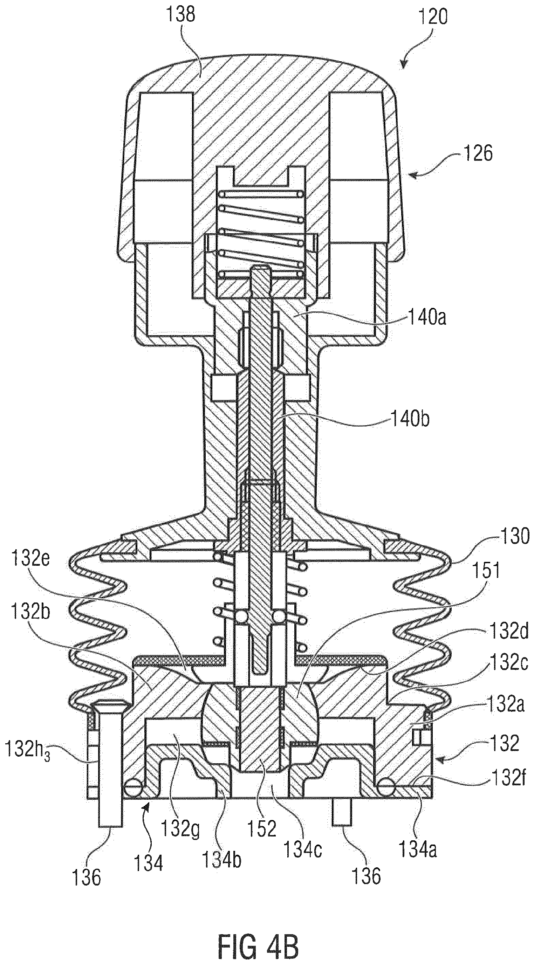

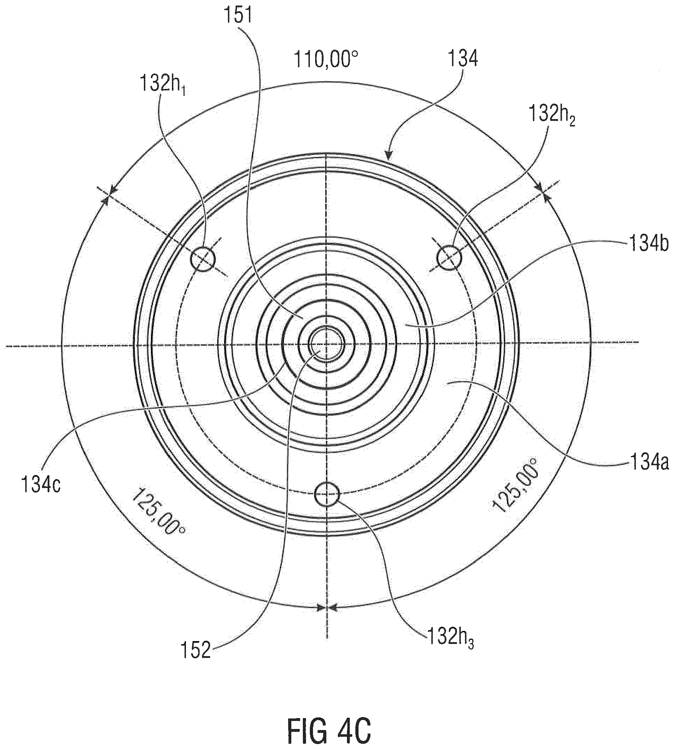

Fig. 4 zeigt die Betätigungseinheit 120 aus Fig. 3 in unterschiedlichen Darstellungen. Fig. 4a ist eine seitliche Darstellung der Betätigungseinheit 120, Fig. 4b ist eine Schnittdarstellung der Betätigungseinheit 120 entlang der Linie A-A in Fig. 4a, und Fig. 4c ist eine Draufsichtdarstellung auf die Betätigungseinheit von unten, d.h. mit Blick auf die Adapterplatte 134.

Die in Fig. 4a gezeigte Darstellung der Betätigungseinheit 120 zeigt im Wesentlichen die gleichen Elemente, die auch in der Fig. 3 zu erkennen sind, und die dort bereits beschrieben wurden. In Fig. 4a ist zusätzlich erkennbar, dass die Betätigungseinheit 120 mehrere Befestigungsvorrichtungen 136 beispielsweise in Form von Schrauben aufweist, die es ermöglichen, die Betätigungseinheit 120 lösbar an der Steuer- und Bedieneinheit 110, beispielsweise an der oben erwähnten Frontplatte 122 (siehe Fig. 2) zu befestigen.

Die in Fig. 4b gezeigte Schnittdarstellung zeigt die innenliegende Mechanik der Betätigungseinheit 120. Die Betätigungseinheit 120 umfasst die bereits anhand der Fig. 3 und 4a gezeigte Grundplatte 132, die, wie aus Fig. 3 erkennbar ist, im Wesentlichen zylindrisch ist. Die Grundplatte 132 hat einen äußeren Abschnitt 132a und einen inneren Abschnitt 132b, wobei der innere Abschnitt 132b eine größere Dicke aufweist als der äußere Abschnitt 132a, so dass die Grundplatte 132 im Bereich 132c eine Stufe hat. Eine Oberseite 132d des inneren Abschnitts 132b der Grundplatte 132 umfasst eine Vertiefung oder Ausnehmung 132e, die sich ausgehend von einem Randbereich des inneren Abschnitts 132b in Richtung der Unterseite 132f der Grundplatte 132 erstreckt. Ein zentraler Bereich der Vertiefung 132e ist eben, und die Vertiefung erstreckt sich ausgehend von diesem ebenen Bereich geradlinig in Richtung der Oberseite 132d der Grundplatte 132. Die Vertiefung 132e dient zur Aufnahme einer Führung für das Betätigungselement 126, die später noch näher beschrieben wird.

Die Grundplatte 132 umfasst ferner eine Ausnehmung 132g, die sich von der Unterseite 132f in Richtung der Oberseite 132d der Grundplatte erstreckt. Bei dem in Fig. 4 gezeigten Ausführungsbeispiel ist die Adapterplatte 134 in der Ausnehmung 132g montiert. Die Adapterplatte 134 hat einen äußeren Abschnitt 134a, der auf der Unterseite 132f der Grundplatte 132 im äußeren Abschnitt 132a derselben angeordnet ist. Die Adapterplatte 134 umfasst einen zentralen Abschnitt 134b, der sich in das Innere der Ausnehmung 132g erstreckt und eine Struktur aufweist, welche eine Führung des Betätigungselements 126 bei einer Bewegung in der z-Richtung bewirkt.

Das Betätigungselement 126 umfasst eine Führungshülse 140a sowie ein an der Führungshülse 140a angeordnetes Führungsrohr 140b. Die Führungshülse 140a ist mit dem Knauf 138 verbunden. Am unteren Ende des Führungsrohres 140b ist eine Halterung 151 angeordnet, die bei dem gezeigten Ausführungsbeispiel die Form einer auf der Oberseite und Unterseite abgeschnittenen Kugel aufweist. Eine der Oberseite 132d der Grundplatte 132 zugewandte Oberseite der Halterung 151 ist eben, und eine der Unterseite 132f der Grundplatte 132 zugewandte Unterseite der Halterung 151 hat in einem zentralen Abschnitt einen Vorsprung, so dass die Unterseite der Halterung 151 eine umlaufende Stufe aufweist. In der Unterseite der Halterung 151 ist eine Ausnehmung gebildet, in der ein Positionselement 152, z.B. ein magnetisches Positionselement in Form eines Dauermagneten, angeordnet ist. Eine Betätigung des Betätigungselements 126 bewirkt eine entsprechende Bewegung der Halterung 151 und des darin angeordneten Positionselements 152.

Eine lösbare Befestigung der Betätigungseinheit 120 an der Steuer- und Bedieneinheit (siehe Fig. 1 und 2) wird durch die Befestigungsvorrichtungen 136 erreicht, die durch entsprechende Bohrungen 132 h₁ bis 132h₃ in die oben erwähnte Grundplatte bzw. Frontplatte 122 greifen. Mit anderen Worten wird die Betätigungseinheit 120 im Wesentlichen durch die Grundplatte 132 an der Frontplatte 122 (siehe Fig. 2) der Steuer- und Bedieneinheit 110 gehalten. Die in Fig. 4 gezeigte Adapterplatte 134, auf die später noch näher eingegangen wird, ist gemäß Ausführungsbeispielen dabei nicht an der Grundplatte 132 angeschraubt, sondern wird zusammen mit dieser an der Frontplatte 122 befestigt. Hierfür weist die Adapterplatte 134 im Außenbereich 134a die gleiche Lochstruktur auf, wie im Außenbereich 132a der Grundplatte 132. Bei anderen Ausführungsbeispielen kann die Betätigungseinheit 120 durch andere Mittel an der Steuer- und Bedieneinheit 110 befestigt werden, beispielsweise durch eine Rastvorrichtung oder Ähnliches.

Fig. 4c zeigt die Betätigungseinheit 120 von unten, d.h. mit Blick auf die Adapterplatte 134. In der Mitte umfasst die Adapterplatte 134 eine Öffnung 134c, durch welche das Positionselement 152 sowie ein Teil der Halterung 151 sichtbar sind. Im Außenbereich 134a umfasst die Adapterplatte 134 sowie die dahinter liegende und in dieser Ansicht nicht sichtbare Grundplatte 132 die Öffnungen oder Löcher 132h₁ bis 132h₃ für die Befestigungsvorrichtungen 136. Gemäß Ausführungsbeispielen sind die Löcher 132h₁ bis 132h₃ nicht gleichmäßig angeordnet, sondern in unterschiedlichen Winkeln. Beispielsweise sind die Löcher 132h₁ und 132h₂ in einem Winkel von 110° zueinander angeordnet, wohingegen die Löcher 132h₁ und 132h₃ sowie die Löcher 132h₂ und 132h₃ jeweils in einem Winkel von 125° zueinander angeordnet sind. Durch diese Ausgestaltung wird sichergestellt, dass eine Montage der Betätigungseinheit 120 an der Steuer- und Bedieneinheit 110 nur in einer vorgegebenen Richtung bzw. an einer vorgegebenen Position möglich ist. Eine solche Vorgehensweise kann gemäß Ausführungsbeispielen erwünscht sein, um eine Montage der Betätigungseinheit 120 an der Steuer- und Bedieneinheit 110 entsprechend einer vorgegebenen Ausrichtung oder an einer vorgegebenen Position zu bewirken, z.B. wenn der Handsteuergeber 112 ausgestaltet ist, um eine Vorzugsbewegung des Betätigungselements 126 in x- und y-Richtung zu ermöglichen. Eine solche Vorzugsbewegung kann z.B. durch eine entsprechend strukturierte Vertiefung 132e in der Oberseite 132d der Grundplatte 134 erreicht werden. Es kann z.B. vorgesehen sein, dass die Vertiefung in der Oberseite 132d der Grundplatte 132 durch eine erste sich in x-Richtung erstreckende Vertiefung und eine zweite, senkrecht zur ersten Vertiefung in y-Richtung verlaufende Vertiefung gebildet ist, und dass über eine in den Vertiefungen angeordnete Führung die Bewegung des Betätigungselements 126 geführt wird, was später noch näher erläutert wird.

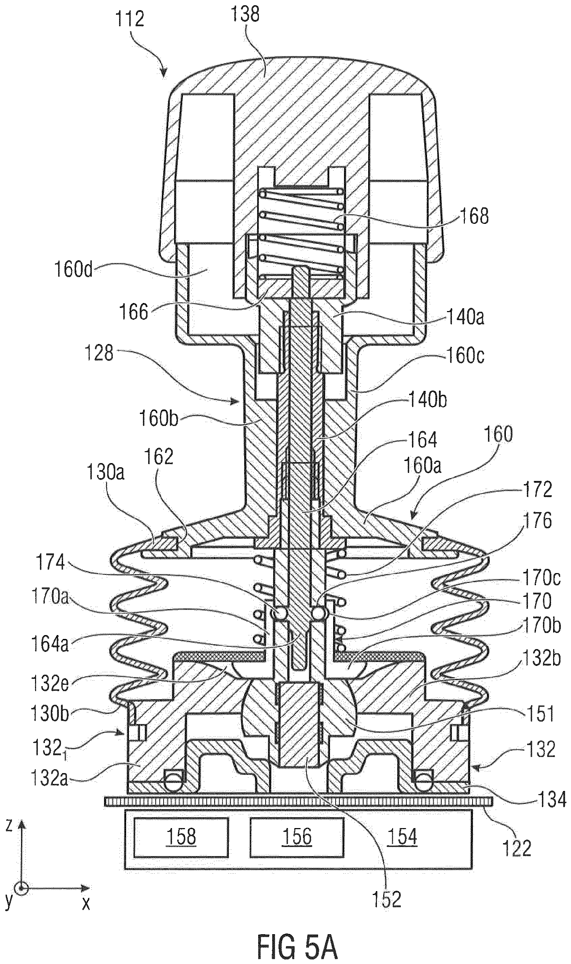

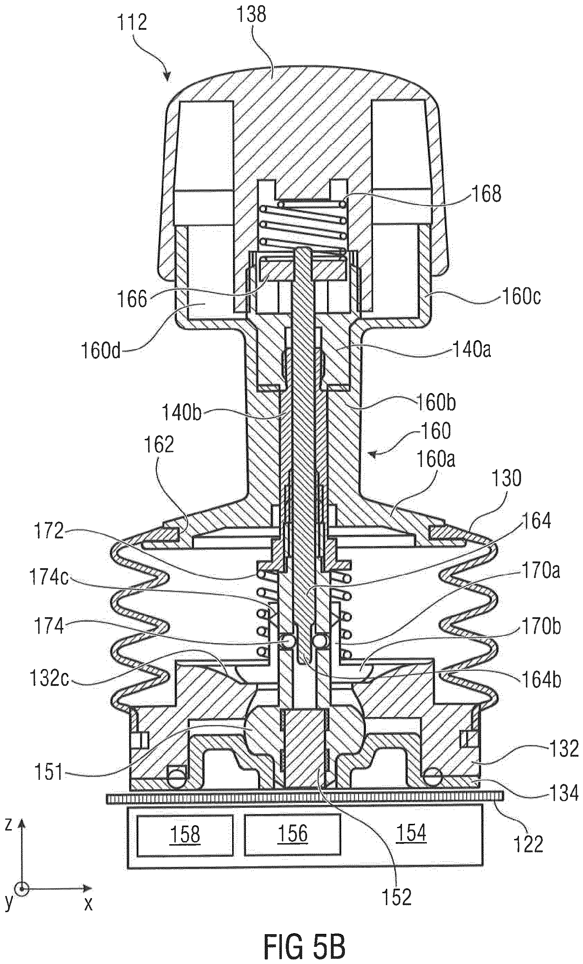

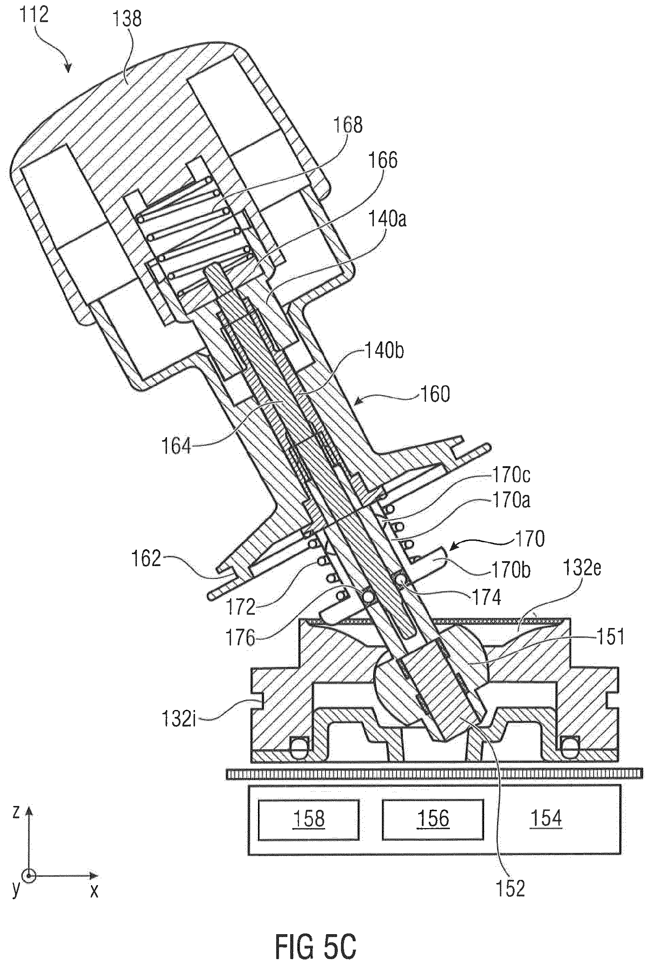

Die Fig. 5 zeigt den erfindungsgemäßen Handsteuergeber gemäß einem bevorzugten Ausführungsbeispiel. Fig. 5a zeigt eine weitere Schnittdarstellung des in Fig. 4a gezeigten Handsteuergebers, der auf der Frontplatte 122 montiert ist. Ferner zeigt Fig. 5a die Betätigungseinheit 120 mit einer verriegelten Arretierungsvorrichtung 128. Fig. 5b zeigt eine Darstellung der Betätigungseinheit 120 mit entriegeltem Arretierungselement 128 und niedergedrücktem Betätigungselement 126.

In Fig. 5a ist die Frontplatte 122 (siehe auch Fig. 2) dargestellt, auf der die Betätigungseinheit 120, auch als Joystick bezeichnet, befestigt ist. Unterhalb der Frontplatte 122 befindet sich eine Auswerteeinheit 154, die eine Sensoreinheit 156, z.B. eine Magnetfeld-Sensoreinheit in Form eines Hall-Sensors, eines magnetoresistiven Sensors oder eines xMR-Sensors umfasst. Ferner kann die Auswerteeinheit 154 gemäß Ausführungsbeispielen eine Steuerung 158, z.B. einen Mikrocontroller, umfassen, die wirksam mit der Sensoreinheit 156 verbunden ist, um basierend auf den durch die Sensoreinheit erfassten Signalen ein Ausgangssignal bereitzustellen, welches eine Auslenkung der Betätigungseinheit 120 angibt. Die Magnetfeld-Sensoreinheit 156 kann eine Mehrzahl von Magnetfeld-Sensorelementen umfassen, um eine Position und/oder eine Bewegung des Betätigungselements 126 zu detektieren. Eine Bewegung des Betätigungselements 126 bewirkt eine Bewegung des Positionselements 152, dessen Bewegung durch die Sensoreinheit erfasst wird und über die Steuerung 158 ausgewertet wird. Die Sensoreinheit 156 umfasst beispielsweise einen Halleffekt-Sensor des Typs "Melexis" MLX90363 der Melexis N.V., Rozendaalstraat 12, 8900 Ypern, Belgien. Bei einem solchen Bauelement sind zwei Halleffekt-Sensorelemente in einem Gehäuse integriert. Mithilfe der Steuerung 158 wird aus den elektrischen Signalen bzw. Messwerten der beiden Sensorelemente ein elektrisches Signal bzw. Messwert für den Grad der Auslenkung des Betätigungselements 126 sowie ein elektrisches Signal bzw. Messwert für eine Richtung der Auslenkung erzeugt.

Gemäß Ausführungsbeispielen ist der erfindungsgemäße Handsteuergeber 112 derart ausgestaltet, dass neben der Bewegung des Betätigungselements 126 in der x/y-Bewegungsebene auch eine hierzu senkrechte Bewegung in z-Richtung möglich ist. Eine solche Änderung in der z-Position wird erfindungsgemäß ebenfalls über die Sensoreinheit 156 erfasst, beispielsweise basierend auf einer Änderung der Intensität der Ausgangssignale, die sich durch die Änderung der Magnetfeldstärke aufgrund des sich ändernden Abstands zwischen dem Positionselement 152 und den Magnetfeld-Sensoren der Sensoreinheit 156 einstellt. Erfindungsgemäß ist es daher nicht erforderlich, bei einem Handsteuergeber, der auch eine Bewegung in z-Richtung zulässt, zusätzliche Sensorelemente vorzusehen, vielmehr kann durch die bereits existierenden Magnetfeld-Sensoren auch eine solche vertikale Bewegung ohne Weiteres erfasst werden.

Gemäß weiteren Ausführungsbeispielen ist der erfindungsgemäße Handsteuergeber 112 derart ausgestaltet, dass die Auswerteeinheit 154 eine Kalibrierung des Handsteuergebers 112 nur dann durchführt, wenn sich das Betätigungselement innerhalb eines vorbestimmten Bereichs um den Nullpunkt befindet. Dies vermeidet eine unerwünschte oder fehlerhafte Kalibrierung, wenn der Handsteuergeber 112 vor dem Einschalten/Aktivieren der Arbeitsmaschine oder der Steuereinheit unerwünscht ausgelenkt wurde. In einem solchen Fall würde bei herkömmlichen Ansätzen beim Anschalten der Baumaschine bzw. beim Beaufschlagen des Handsteuergebers mit Leistung eine Kalibrierung automatisch durchgeführt. Eine hieraus resultierende, fehlerhafte Kalibrierung lässt aber keinen ordnungsgemäßen Betrieb zu, so dass eine erneute Kalibrierung erforderlich ist, sobald das Betätigungselement in den Nullzustand gebracht wurde. Eine solche Situation kann beispielsweise dann auftreten, wenn die Steuer- und Bedieneinheit der Arbeitsmaschine bzw. der Baumaschine während des Nichtbetriebs derselben abgedeckt wurde, so dass beispielsweise die Abdeckung auf den Handsteuergeber einwirkt und diesen unerwünscht aus dem Nullpunkt auslenkt.

Die vorliegende Erfindung vermeidet gemäß Ausführungsbeispielen diese Problematik, da die Auswerteeinheit 154 konfiguriert bzw. programmiert ist, um beispielsweise beim Neustart oder Anlassen der Arbeitsmaschine zunächst die Lage des Betätigungselements zu prüfen, um festzustellen, ob sich das Betätigungselement innerhalb eines vorbestimmten Bereichs um einen Nullpunkt befindet. Der Nullpunkt ist beispielsweise durch bekannte Ausgangssignalwerte der Magnetfeld-Sensoreinheit definiert. Erfindungsgemäß kann vorgesehen sein, dass Abweichungen von dieser Nullpunktposition von bis zu 5 bis 10 % toleriert werden, so dass Sensorwerte beim Einschalten des Geräts, die anzeigen, dass die Position des Betätigungselements innerhalb dieses Bereichs ist, dazu führen, dass die Kalibrierung durchgeführt wird. Liegen die erfassten Signale außerhalb des Bereichs, wird von einer unerwünscht starken Auslenkung des Betätigungselements ausgegangen und eine Kalibrierung wird unterdrückt. Gemäß weiteren Ausführungsformen kann vorgesehen sein, den Benutzer über diesen Umstand zu informieren und diesen aufzufordern, zu überprüfen, ob sich das Betätigungselement im Nullpunkt befindet. Erst wenn dies festgestellt wird, wird die Kalibrierung durchgeführt und erst nach Abschluss einer erfolgreichen Kalibrierung wird die Benutzung des Handsteuergebers zugelassen, d. h. bei einer übermäßigen Auslenkung des Betätigungselements des Handsteuergebers wird nicht nur die Kalibrierung vermieden, sondern auch eine Benutzung unterdrückt, so dass die Arbeitsmaschine erst nach erfolgreicher Kalibrierung in Betrieb genommen werden kann.

Diese Ausführungsform hat den weiteren Vorteil, dass Abweichungen bei der Montage der Betätigungseinheit toleriert werden können. Beim Austausch der Betätigungseinheit des Handsteuergebers kann es dazu kommen, dass die neu zu montierende Betätigungseinheit, beispielsweise aufgrund von Verschmutzungen, gegenüber der vorhergehend installierten Betätigungseinheit schräg ausgerichtet ist, so dass die Nullpunktpositionen der älteren und der neueren Betätigungseinheit nicht mehr übereinstimmen. In einem solchen Fall wird dennoch eine Kalibrierung zugelassen, soweit die Abweichung aufgrund der Montageabweichung innerhalb des festgelegten Bereichs um den tatsächlichen Nullpunkt liegt.

Gemäß einer weiteren Ausführungsform ist der erfindungsgemäße Handsteuergeber 112 derart ausgestaltet, dass die Auswerteeinheit 154 nachfolgend zu einer Montage der Betätigungseinheit bei Erreichen einer Auslenkung des Betätigungselements, die z.B. nur 80% bis 90% der maximal möglichen mechanischen Auslenkung des Betätigungselements beträgt, bereits eine maximale "elektronische" Auslenkung anzeigt. Während des weiteren Betriebs kann dieser Bereich reduziert werden, bis die "elektronische" Auslenkung einer 100-prozentigen mechanischen Auslenkung des Betätigungselements entspricht. Diese Ausführungsform kompensiert eine möglicherweise unsymmetrische Auslenkung des Betätigungselements, z.B. aufgrund eines verkippten oder schrägen Einbaus. In einem solchen Fall sind die Auslenkungen in die entsprechenden Richtungen (z.B. in die x-Richtung und in die y-Richtung) unterschiedlich. Eine ähnliche Situation kann auftreten, wenn das Betätigungselement des Handsteuergebers einen asymmetrischen Aufbau aufweist.

Anhand der Fig. 5a und anhand der Fig. 5b wird nun der Aufbau und die Funktionsweise der gemäß einem Ausführungsbeispiel vorgesehenen Arretierungsvorrichtung 128 näher erläutert. Die Arretierungsvorrichtung 128 umfasst ein Arretierungselement 160, welches einen unteren, flachen kegelstumpfförmigen Abschnitt 160a, einen sich von dem oberen, flachen Abschnitt des Kegelstumpfabschnitts 160a nach oben erstreckenden zylindrischen mittleren Abschnitt 160b sowie einen oberen, zylinderförmigen Abschnitt 160c aufweist. Das Arretierungselement 160 umfasst eine innere Bohrung im unteren und mittleren Abschnitt, welche das Führungsrohr 140b des Betätigungselements 126 aufnimmt. Der obere Abschnitt 160c des Arretierungselements 160 sowie ein hieran angrenzender Abschnitt des mittleren Abschnitts 160b umfassen eine Ausnehmung 160d, in die sich ein zentraler Abschnitt des Knaufes 138 hineinerstreckt. Ein oberer Teil des Führungsrohrs 140b erstreckt sich durch die Ausnehmung 160d zu dem Knauf 138. An dem unteren Ende des zentralen Abschnitts 138a des Knaufes 138 ist die Führungshülse 140a des Betätigungselements 126 angeordnet, die sich in den Teil der Ausnehmung 160d des Arretierungselements 160 erstreckt, der im oberen Teil des mittleren Abschnitts 160b des Arretierungselements 160 gebildet ist.

Die Arretierungsvorrichtung 128 umfasst einen innenliegenden Stab 164, der innerhalb des Führungsrohres 140b beweglich angeordnet ist. Ein unteres, der Grundplatte 132 benachbartes Ende des Stabes 164 umfasst ein verjüngtes Ende 164a, und ein oberes, dem Knauf 138 benachbartes Ende ist mit einer Platte 166 versehen, welche bei einer Bewegung nach oben in Fig. 5a mit einem im Knauf 138 angeordneten Federelement 168 zusammenwirkt und dessen Stauchung bewirkt.

Die Arretierungsvorrichtung 128 umfasst eine Führung 170, die in Form einer Hülse ausgebildet ist, die das Führungsrohr 140a des Betätigungselements 126 umgibt, und bezüglich dieses Führungsrohres beweglich ist. Die Führungshülse 170 umfasst den Hülsenabschnitt 170a sowie einen sich von einem unteren Ende des Hülsenabschnitts 170a radial nach außen erstreckenden Vorsprung 170b. Der untere Abschnitt der Führungshülse 170, der den Vorsprung 170b aufweist, ist innerhalb der oben beschriebenen Vertiefung 132e angeordnet, wobei der flache Abschnitt der Vertiefung 132e eine Abmessung aufweist, so dass der untere Abschnitt der Führungshülse 170 umfassend den Vorsprung 170b in einer nicht-ausgelenkten Position des Betätigungselements 126 auf diesem ebenen Abschnitt ruht. Gemäß dem dargestellten Ausführungsbeispiel ist die Tiefe der Vertiefung 132e entsprechend der Höhe des Vorsprungs 170b der Führungshülse 170 gewählt, und die Vertiefung erstreckt sich von der flachen Ebene in Richtung der äußeren Ränder des inneren Abschnitts 132b der Grundplatte 132 im Wesentlichen geradlinig nach oben. Die Führungshülse 170 ist in die Fig. 5a gezeigte Position durch das Federelement 172 vorgespannt, wobei ein unteres Ende des Federelements 172 den Hülsenabschnitt 170a umgibt und auf dem Vorsprung 170b der Führungshülse 170 angeordnet ist. Ein oberes, entgegengesetztes Ende des Federelements 172 ist an einer Unterseite des Arretierungselements 160 angeordnet.

Die Arretierungsvorrichtung umfasst eine oder mehrere Kugeln 174, die einen Durchmesser aufweisen, der größer ist als eine Dicke des Wandabschnitts des Führungsrohres 140b. Die Kugeln 174 sind in entsprechenden Öffnungen 176 in der Wand des Führungsrohres 140b angeordnet, wobei aufgrund des größeren Durchmessers die Kugeln 174 entweder in Richtung der Führungshülse 170 oder in Richtung des innenliegendes Stabs 164 aus den Öffnungen bzw. Löchern 176 vorstehen. Bei der in Fig. 5a gezeigten, verriegelten Position des Handsteuergebers 112 erstrecken sich die Kugeln 174 in Richtung der Führungshülse 170, die ihrerseits Vertiefungen 170c im Hülsenabschnitt 170a aufweist, in die sich die Kugeln 174 in der verriegelten Position erstrecken. In einer nicht-verriegelten Position wird eine Bewegung des innenliegenden Stabes 164 nach oben bewirkt, so dass die in Fig. 5b gezeigte Situation eintritt, gemäß der die Kugeln nicht mehr arretiert sind, sondern sich in Richtung des Innenraums des Führungsrohres, aufgrund des verjüngten Abschnitts 164a des Stabs 164, bewegen können, und damit eine Bewegung ermöglichen.

Die Funktionsweise des gerade beschriebenen Arretierungsmechanismus wird nun anhand der Fig. 5 erläutert. Um das Betätigungselement 126 in der x-, y- und/oder z-Richtung bewegen zu können, ist es erforderlich, zunächst die Arretierungsvorrichtung 128 manuell zu entriegeln, indem das Arretierungselement 160 in Richtung des Knaufes 138 bewegt wird. Bei einer Bewegung des Betätigungselements 126 ist es nicht dauerhaft erforderlich, das Arretierungselement 160 in dieser Entriegelungsposition zu halten. Wird das Betätigungselement 126 jedoch wieder in die Ausgangsposition bzw. Mittelstellung zurückbewegt, so wird das Betätigungselement 126 selbsttätig wieder verriegelt, um eine ungewollte Bedienung bzw. Bewegung des Handsteuergebers zu verhindern.

Zwischen der Innenwand der Führungshülse 170 und dem innenliegenden Stab 164 befinden sich die Kugeln 174, die bei einer nicht-betätigten Arretierungsvorrichtung 128 durch die Löcher bzw. Öffnungen 176 im Führungsrohr 140b in die an der Innenwand der Führungshülse 170 befindlichen, umlaufenden Aussparungen oder Vertiefungen 170c eingreifen und so eine Bewegung der Führungshülse 170 und damit des gesamten Betätigungselements 126 verhindern. Beim Entriegeln bzw. bei einer Bewegung des Arretierungselements 160 in Richtung des Knaufs 138 wird der innenliegende Stab 164, der innerhalb des Führungsrohres 140b beweglich angeordnet ist, und die daran fest angeordnete Platte 166 unterhalb des Federelements 168 ebenfalls in Richtung des Knaufs 138 bewegt, so dass das Federelement 168 gestaucht wird. Da der innenliegende Stab 164 an seinem unteren Ende, im Bereich der Führung 170 verjüngt ist, ist es nun möglich, dass sich die Kugeln aufgrund der Bewegung des innenliegenden Stabes 164 in Richtung des Knaufs 138 aus den Aussparungen 170c herausbewegen, so dass eine Bewegung der Führung 170 und damit des gesamten Betätigungselements 128 ermöglicht wird. Wird das Arretierungselement 160 wieder losgelassen, so würde es aufgrund der Federkraft des Federelements 168 wieder nach unten gedrückt. Hierdurch werden die Kugeln 174 wieder in die Aussparung 170c bewegt, so dass die Bewegung der Führung 170 und damit des gesamten Betätigungselements 126 verhindert wird, d.h. das Betätigungselement 126 wieder verriegelt.

Ist das Betätigungselement 126 entriegelt, so kann es in der x-, y- oder in der z-Richtung bewegt werden, wobei bei einer Bewegung des Betätigungselements 126 der Knauf 138 und die darin angeordnete Mechanik umfassend u.a. die Führungshülse 140a und das Führungsrohr 140b nach unten bewegt werden, wodurch das Federelement 172 gestaucht wird. Wird der Knauf 138 wieder losgelassen, so wird dieser aufgrund der Federkraft des Federelements 172 wieder nach oben bewegt.

Fig. 5b zeigt das in Fig. 5a beschriebene Element mit entriegelter Arretierungsvorrichtung 128 und einer Auslenkung in die z-Richtung.

Fig. 5c zeigt die in Fig. 5a beschriebene Anordnung mit entriegelter Arretierungsvorrichtung 128 und in einer in der Bewegungsebene (x/y-Ebene) verkippten Stellung. Wie bei der Fig. 5c dargestellten Bewegung des Betätigungselements 126 zu erkennen ist, ermöglicht eine Betätigung der Arretierungsvorrichtung 128 eine Bewegung der Führung 170 in Richtung des Knaufes 38 und gleichzeitig eine entsprechende Stauchung des Federelements 172. Die Grundplatte 132 umfasst die oben erwähnte Vertiefung 132e innerhalb der die Führung 170 während einer Bewegung des Betätigungselements 126 geführt ist. Die Vertiefung 132e kann beispielsweise kreuzförmig ausgestaltet sein, um so Abschnitte in x-Richtung und Abschnitte in y-Richtung aufzuweisen, so dass die Führung 170 innerhalb dieser kreuzförmigen Vertiefung eine Vorzugsbewegung des Betätigungselements 126 in x- und y-Richtung vorgibt. Wie aus Fig. 5c zu erkennen ist, bewegt sich die Führungshülse 170 bei einer Auslenkung des Betätigungselements 126 entlang der schrägen Oberfläche der Vertiefung 132e in Richtung des Arretierungselements 160, wodurch, wie oben erwähnt, die Feder 172 gestaucht wird. Wird das Betätigungselement 126 losgelassen, so wird es aufgrund der Federkraft des Federelements 172 wieder in die Ausgangsposition bzw. Mittelposition zurückbewegt. Die Verkippung des Betätigungselements 126 bewirkt die Bewegung der Führungshülse 170 nach oben und die Bewegung des Führungsrohrs 140b nach unten. Die Kugel 174 wird wieder in die Öffnung 176 im Führungsrohrwand bewegt, allerdings ist die Aussparung 170c in der Führungshülse 170 aufgrund deren Bewegung nach oben nicht mit dem Loch 176 ausgerichtet, so dass keine Verriegelung eintritt.

Die an der Betätigungseinheit 120 angeordnete, manuell entriegelbare Arretierungsvorrichtung 128 verhindert im nicht-betätigten Zustand ein Bewegen des Betätigungselements 128 in der x-, y- und/oder z-Richtung. Hierdurch wird in vorteilhafter Weise eine unerwünschte oder ungewollte Bedienung bzw. Bewegung des Handsteuergebers 112 verhindert, so dass der erfindungsgemäße Handsteuergeber insbesondere für den Einsatz in Steuer- und Bedieneinheiten im Bereich sicherheitsrelevanter Anwendungen, z.B. Hubarbeitsbühnen, geeignet ist.

Gemäß Ausführungsbeispielen ist der Faltenbalg 130 vorteilhaft ausgeformt. Ein oberes Ende 130a des Faltenbalgs 130 ist in der umlaufenden Vertiefung oder Nut 162 des unteren Endes des kegelstumpfförmigen Abschnitts 160a des Arretierungselements angeordnet. Ein unteres Ende 130b des Faltenbalgs 130 ist in einer entsprechenden Ausnehmung oder Nut 132i, die in einer äußeren Oberfläche des Abschnitts 132a der Grundplatte 132 gebildet ist, befestigt. Der Faltenbalg 130 ist durch geeignete Mittel lösbar an der Betätigungseinheit 120 befestigt und hat eine im Wesentlichen zylindrische Form mit Durchmessern, die über die Länge des Faltenbalgs im Wesentlichen konstant und größer als der Durchmesser des über den Faltenbalg hinausragenden Bauteils der Betätigungseinheit, z.B. des Knaufes, ist, so dass ein Austausch des Faltenbalgs ohne weiteres möglich ist, insbesondere ohne eine Demontage der verbleibenden Elemente der Betätigungseinheit 112. Diese Ausgestaltung des Faltenbalgs ermöglicht einen einfachen Austausch. Beim Austausch ist nur ein Lösen der entsprechenden Fixierungen des Faltenbalgs an den Elementen der Betätigungseinheit erforderlich und der Faltenbalg kann nach oben abgezogen werden, ohne dass andere Teile der Betätigungseinheit demontiert werden müssten. Der neue Faltenbalg wird dann auf ähnliche Weise von oben über die Elemente der Betätigungseinheit gezogen und fixiert, so dass der Austausch, verglichen mit herkömmlichen Ansätzen, deutlich vereinfacht und weniger aufwendig ist.

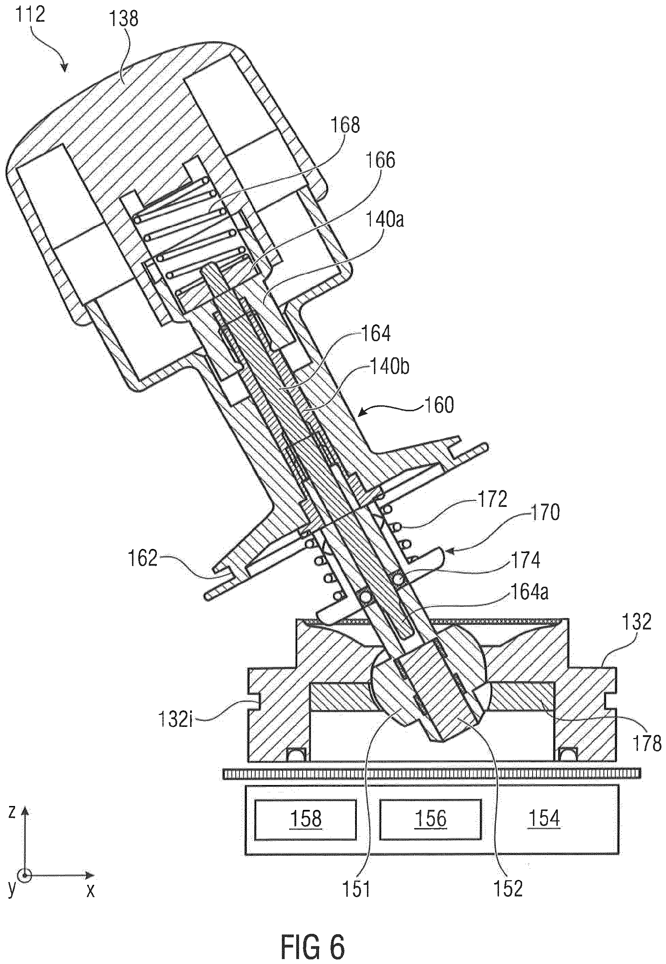

Fig. 6 zeigt eine weitere Ausführungsform des erfindungsgemäßen Handsteuergebers, dessen Betätigungselement 126 bezüglich der Ruhe- oder Mittelposition ausgelenkt ist. In Fig. 6 ist eine Ausgestaltung des erfindungsgemäßen Handsteuergebers dargestellt, bei dem anstelle der in den bisherigen Figuren vorgesehenen Adapterplatte 134 eine Gegenhalterplatte 178 in der Ausnehmung 132g der Grundplatte 132 montiert ist. Die Gegenhalterplatte 178 ist innerhalb der Ausnehmung 132g angeordnet und erstreckt sich nicht in einem Bereich unterhalb der Grundplatte 132, im Gegensatz zu der in Fig. 4b näher erläuterten Adapterplatte 134.

Die Gegenhalterplatte 178 kann mittels Schrauben oder mittels einer Rastvorrichtung an der Grundplatte 132 befestigt sein, wobei die Gegenhalterplatte 178 ausgebildet ist, um eine Bewegung des Betätigungselements 126 und damit der entsprechenden Halterung 151 mit dem angeordneten Positionselement 152 in z-Richtung zu verhindern. Mit anderen Worten bedeutet dies, dass im Fall der montierten Gegenhalterplatte 178, wie in Fig. 6 gezeigt ist, eine Bewegung des Betätigungselements 126 nur in x- und y-Richtung ermöglicht wird, nicht aber in z-Richtung.

Die oben erwähnte, anhand der Fig. 4 beschriebene Adapterplatte 134 erlaubt eine Bewegung des Betätigungselements 126 in die z-Richtung, wobei eine solche Bewegung auch grundsätzlich möglich ist, wenn keine Adapterplatte vorgesehen ist und wenn die Gegenhalterplatte 178 (siehe Fig. 6) nicht montiert ist. Gemäß Ausführungsbeispielen wird die Adapterplatte 134 verwendet, um einen Hub des Betätigungselements 126 in z-Richtung zu begrenzen, so dass bei einer Betätigung des Betätigungselements 126 in z-Richtung immer eine gleiche Positionsänderung des Positionselements 152 durch die Auswerteeinheit 154 detektiert werden kann. Gemäß den anhand der Fig. 3 bis 5 beschriebenen Ausführungsbeispielen ist die Adapterplatte 134 derart ausgestaltet, dass deren äußerer Abschnitt 134a sich unter die Unterseite der Grundplatte 132 erstreckt (siehe Fig. 5a), so dass, wie aus einem Vergleich der Fig. 5 und 6 zu erkennen ist, bei Einsatz der Adapterplatte 134 der Abstand zu der Sensoreinheit 156 des Positionselements 152 größer ist als ohne Adapterplatte. Verglichen mit einer Situation ohne Adapterplatte und nur mit der Gegenhalterplatte 178 bewirkt die Adapterplatte 134 somit zusätzlich, dass ein größerer Abstand der gesamten Betätigungseinheit 120 und damit auch des Positionselements 152 zu der Auswerteeinheit 154 und der darin angeordneten Sensoreinheit 156 entsteht, wodurch die Auswerteeinheit in der Lage ist, festzustellen, ob die Betätigungseinheit 120 aufgrund ihres Aufbaus eine z-Achsenfunktionalität zulässt oder nicht.

Anstelle der Verwendung einer Adapterplatte 134 sind auch andere Ausgestaltungen zur Arretierung des Betätigungselements in der z-Richtung denkbar. Beispielsweise kann eine integrierte Anordnung vorgesehen sein, die einen Aufbau ähnlich der oben erwähnten Arretierungsvorrichtung aufweist und im oberen Bereich des Führungsrohres 140b angeordnet ist. Die Arretierungsvorrichtung verhindert in der arretierten Stellung eine Bewegung in z-Richtung. Die Entriegelung ermöglicht eine Bewegung in z-Richtung und kann z.B. nach Art eines Kugelschreibers erfolgen, beispielsweise durch ein Drehen des Knaufes 138, so dass das Betätigungselement beim Entriegeln entweder von der Auswerteeinheit 154 weg oder zu dieser hin bewegt wird. Dieser Unterschied im Abstand kann dann wieder entsprechend durch die Auswerteeinheit erfasst werden. Gemäß Ausführungsformen kann die integrierte Anordnung in die verriegelte (zweite) Stellung vorgespannt sein, so dass diese bei einer Nicht-Betätigung in diese verriegelte Stellung zurückkehrt und damit insbesondere für den Einsatz in Steuer- und Bedieneinheiten im Bereich sicherheitsrelevanter Anwendungen, z.B. Hubarbeitsbühnen, geeignet ist.

Die gerade beschriebenen Ausführungsformen betreffend die Möglichkeit, eine Bewegung des Betätigungselements in die z-Richtung wahlweise zuzulassen oder zu verhindern, erlauben den Einsatz des gleichen Betätigungsglieds, unabhängig davon, ob eine Bewegung in der z-Richtung erwünscht ist oder nicht. In beiden Fällen bedarf es lediglich der Montage des Handsteuergebers, ohne dass weitere Schritte, z.B. im Hinblick auf die Auswerteeinheit, erforderlich sind. Die Auswerteeinheit 154 ist konfiguriert, um zu erkennen, ob dieser eine Betätigung in der z-Richtung ermöglicht oder nicht, basierend auf den einer Überwachung der Intensität der erfassten Signale, die sich aufgrund der unterschiedlichen Abstände, in denen sich das magnetische Positionselement von dem Sensor bei den unterschiedlichen Stellungen befindet, ändert. Diese Änderung kann eindeutig erkannt werden. Eine Modifizierung der Auswerteeinheit ist nicht erforderlich, da die Auswerteeinheit aufgrund der durch die Magnetfeld-Sensoreinheit erfassten Signale automatisch erkennt, ob die aktuell montierte Betätigungseinheit des Handsteuergebers eine Bewegung in z-Richtung zulässt oder nicht.

Die bei den oben dargelegten Ausführungsbeispielen erwähnte Auswerteeinheit 154 sind vorzugsweise die Bereiche, die die Sensoreinheit 156 und die Steuerung 158 aufweisen, wasserdicht und/oder luftdicht abgeschlossen, beispielsweise ist die Auswerteeinheit in diesem Bereich mit einer elektrisch nicht-leitenden und nicht-magnetischen Vergussmasse umgeben. Eine derart gekapselte Ausführung schützt die Auswerteeinheit 154 sowie die darin befindlichen Elemente vor ungünstigsten Umwelteinflüssen, beispielsweise Regen und Staub. Die Auswerteeinheit 154 kann an einer Unterseite der Frontplatte 122 durch Kleben, Verschraubung oder Rasten befestigt sein.

Die Frontplatte 122 besteht vorzugsweise aus einem nicht-magnetischen Material, beispielsweise aus einer Leiterplatte, auf der die Auswerteeinheit bzw. deren Elemente befestigt und verdrahtet sind, wobei auf der der Betätigungseinheit 120 zugewandten Seite eine Abdeckungsfolie vorgesehen sein kann.

Vorteilhafterweise umfassen auch die Grundplatte 132, die Adapterplatte 130 und/oder die Gegenhalterplatte 178 ein nicht-magnetisches Material, und sind beispielsweise aus Kunststoff, Aluminium oder einem anderen geeigneten Material hergestellt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Hubarbeitsbühne
- 102: Chassis
- 104: Aufbau
- 106: Kranmechanismus
- 108: Arbeitskorb
- 110: Steuer- und Bedieneinheit
- 110a/b: Gehäuseteil
- 112: Handsteuergeber
- 114: Boden
- 116: Tastenfeld
- 118: Anzeige
- 120: Betätigungseinheit/Joystick
- 122: Frontplatte
- 124: Reling
- 126: Betätigungselement
- 128: Arretierungsvorrichtung
- 130: Faltenbalg
- 130a: oberes Ende des Faltenbalgs
- 130b: unteres Ende des Faltenbalgs
- 132: Grundplatte
- 132a: äußerer Abschnitt der Grundplatte
- 132b: innerer Abschnitt der Grundplatte
- 132c: Stufe in der Grundplatte
- 132d: Oberseite der Grundplatte
- 132e: Vertiefung in der Grundplatte
- 132f: Unterseite der Grundplatte
- 132g: Ausnehmung in der Unterseite der Grundplatte
- 132h: Bohrung durch den äußeren Abschnitt der Grundplatte
- 132i: Nut in der Außenwand der Grundplatte
- 134: Adapterplatte
- 134a: äußerer Abschnitt der Adapterplatte
- 134b: zentraler Abschnitt der Adapterplatte
- 134c: Öffnung in der Adapterplatte
- 136: Befestigungsvorrichtung
- 138: Knauf
- 138a: zentraler Abschnitt 134a des Knaufes
- 140a: Führungshülse
- 140b: Führungsrohr
- 151: Halterung
- 152: Positionselement
- 154: Auswerteeinheit
- 156: Sensoreinheit
- 158: Steuerung/Mikrocontroller
- 160: Arretierungselement
- 160a: unterer Abschnitt des Arretierungselements
- 160b: mittlerer Abschnitt des Arretierungselements
- 160c: oberer Abschnitt des Arretierungselements
- 160d: Ausnehmung im Arretierungselement
- 162: Nut im Randbereich des Arretierungselements
- 164: Stab
- 164a: verjüngtes Ende des Stabes
- 166: Platte
- 168: Federelement
- 170: Führung/Führungshülse
- 170a: Hülsenabschnitt
- 170b: Vorsprung der Führungshülse
- 170c: Vertiefung in Führungshülseninnenwand
- 172: Federelement
- 174: Kugel
- 176: Öffnung im Führungsrohrwand
- 178: Gegenhalterplatte

## Patentansprüche

1. Handsteuergeber (112) für eine Steuer- und Bedieneinheit (110) einer Hubarbeitsbühne (100), Arbeitsmaschine oder Baumaschine, mit:
zumindest einer Betätigungseinheit (120), die ein Betätigungselement (126) umfasst, das zumindest ein magnetisches Positionselement (152) aufweist; und
einer Auswerteeinheit (154), die zumindest eine Magnetfeld-Sensoreinheit (156) umfasst,
wobei die Auswerteeinheit (154) ausgebildet ist, um basierend auf einem Sensorsignal von der Magnetfeld-Sensoreinheit (156) eine Position und/oder Bewegung des Betätigungselements (126) in einer Bewegungsebene zu detektieren,
wobei das Betätigungselement (126) in Bezug zu der Sensoreinheit (156) entlang einer weiteren Bewegungsrichtung senkrecht zu der Bewegungsebene bewegbar ist, und
wobei die Auswerteeinheit (154) ausgebildet ist, um eine Bewegung des Betätigungselements (126) entlang der weiteren Bewegungsrichtung basierend auf einem Sensorsignal von der Magnetfeld-Sensoreinheit (156) zu detektieren,
**dadurch gekennzeichnet, dass**
das Betätigungselement (126) zwischen einer ersten Stellung, in der die Bewegung entlang der weiteren Bewegungsrichtung ermöglicht ist, und einer zweiten Stellung, in der die Bewegung entlang der weiteren Bewegungsrichtung nicht möglich ist, umschaltbar ist, und
die Auswerteeinheit (154) ausgebildet ist, um basierend auf einem Sensorsignal von der Magnetfeld-Sensoreinheit (156) die erste Stellung oder die zweite Stellung des Betätigungselements (126) zu detektieren.

2. Handsteuergeber (112) nach Anspruch 1, bei dem die Abstände des nicht-ausgelenkten magnetischen Positionselements (152) des Betätigungselements (126) von der Magnetfeld-Sensoreinheit (156) in der ersten Stellung des Betätigungselements (126) und in der zweiten Stellung des Betätigungselements (126) unterschiedlich sind.

3. Handsteuergeber (112) nach Anspruch 1 oder 2, mit einer Adapterplatte (134) und einer Gegenhalterplatte (178), von denen eine in dem Handsteuergeber (112) montiert ist, abhängig davon, ob das Betätigungselement (126) in der ersten Stellung oder in der zweiten Stellung ist,
wobei in der zweiten Stellung des Betätigungselements (126) die Gegenhalterplatte (178) in dem Handsteuergeber (112) montiert ist, um eine Bewegung des Betätigungselements (126) aus der zweiten Stellung zu verhindern, und
wobei in der ersten Stellung des Betätigungselements (126) die Adapterplatte (134) in dem Handsteuergeber (112) derart montiert ist, dass der Abstand des nicht-ausgelenkten magnetischen Positionselements (152) des Betätigungselements (126) von der Magnetfeld-Sensoreinheit (156) größer ist als der Abstand bei montierter Gegenhalterplatte (178).

4. Handsteuergeber (112) nach Anspruch 1 oder 2, mit einer in dem Betätigungselement (126) integrierten, ersten mechanischen Arretierung, die ausgebildet ist, um das Betätigungselement (126) in der zweiten Stellung zu arretieren und um das Betätigungselement (126) in der ersten Stellung freizugeben, derart, dass die Abstände des nicht-ausgelenkten magnetischen Positionselements (152) des Betätigungselements (126) von der Magnetfeld-Sensoreinheit (156) in der ersten Stellung des Betätigungselements (126) und in der zweiten Stellung des Betätigungselements (126) unterschiedlich sind.

5. Handsteuergeber (112) nach einem der vorhergehenden Ansprüche, bei dem die Betätigungseinheit (120) eine manuell entriegelbare Arretierungsvorrichtung (128) aufweist, welche im nichtbetätigten Zustand ein Bewegen des Betätigungselements (126) verhindert.

6. Handsteuergeber (112) nach Anspruch 5, mit einer Führung (170), die mit der manuell entriegelbaren Arretierungsvorrichtung (128) zusammenwirkt und die im betätigten Zustand der manuell entriegelbaren Arretierungsvorrichtung (128) bezüglich des Betätigungselements (126) bewegbar ist, wobei die manuell entriegelbare Arretierungsvorrichtung (128) folgendes umfasst:
einen Stab (164) mit einem verjüngten, unteren Ende (164a), das im Bereich der Führung (170) angeordnet ist, wobei der Stab (164) in einem in der Führung (170) aufgenommenen Führungsrohr (140b) des Betätigungselements (126) beweglich angeordnet ist, und
eine oder mehrere Kugeln (174), die zwischen einer Innenwand der Führung (170) und dem Stab (164) angeordnet sind, wobei die Innenwand der Führung (170) eine oder mehrere Aussparungen (170c) zur teilweisen Aufnahme der Kugeln (174) aufweist, und wobei das Führungsrohr (140b) eine oder mehrere Löcher (176) zur teilweisen Aufnahme der Kugeln (174) aufweist.

7. Handsteuergeber (112) nach Anspruch 6, bei dem
im nicht-betätigten Zustand der manuell entriegelbaren Arretierungsvorrichtung (128) der nicht-verjüngte Teil (164a) des Stabes (164) im Bereich der Löcher (176) angeordnet ist, so dass eine Kugel (174) teilweise in einem Loch (176) angeordnet ist und sich in eine Aussparung (170c) in der Führung (170) erstreckt, so dass eine Bewegung der Führung (170) und damit des Betätigungselements (126) nicht möglich ist, und
im betätigten Zustand der manuell entriegelbaren Arretierungsvorrichtung (128) der verjüngte Teil (164a) des Stabes (164) im Bereich der Löcher (176) angeordnet ist, so dass eine Kugel (174) teilweise in einem Loch (176) angeordnet ist und sich in das Führungsrohr (140b) erstreckt, so dass eine Bewegung der Führung (170) und damit des Betätigungselements (126) möglich ist.

8. Handsteuergeber (112) nach einem der vorhergehenden Ansprüche, mit einem Faltenbalg (130), wobei der Faltenbalg (130) eine im Wesentlichen zylindrische Form aufweist.

9. Steuer- und Bedieneinheit (110) mit einem Handsteuergeber (112) nach einem der vorhergehenden Ansprüche.

10. Hubarbeitsbühne (100), Arbeitsmaschine oder Baumaschine mit einer Steuer- und Bedieneinheit (110) nach Anspruch 9.

## Claims

1. A manual control device (112) for a control and operating unit (110) of a lifting work platform (100), work machine or construction machine, comprising:
at least one actuating unit (120) which comprises an actuation element (126) comprising at least one magnetic position element (152); and
an evaluating unit (154) which comprises at least one magnetic field sensor unit (156),
wherein the evaluating unit (154) is configured to detect a position and/or movement of the actuation element (126) in a plane of movement based on a sensor signal from the magnetic field sensor unit (156),
wherein the actuation element (126) is movable relative to the sensor unit (156) along a further direction of movement perpendicularly to the plane of movement, and
wherein the evaluating unit (154) is configured to detect a movement of the actuation element (126) along the further direction of movement based on a sensor signal from the magnetic field sensor unit (156),
**characterized in that**
the actuation element (126) is switchable between a first position in which movement along the further direction of movement is allowed, and a second position in which movement along the further direction of movement is not possible, and
the evaluating unit (154) is configured to detect the first position or the second position of the actuation element (126) based on a sensor signal from the magnetic field sensor unit (156).

2. The manual control device (112) in accordance with claim 1, wherein the distances between the non-deflected magnetic position element (152) of the actuation element (126) and the magnetic field sensor unit (156) are different in the first position of the actuation element (126) and in the second position of the actuation element (126).

3. The manual control device (112) in accordance with claim 1 or 2, comprising an adapter plate (134) and a hold-up plate (178) of which one is mounted in the manual control device (112), depending on whether the actuation element (126) is in the first position or in the second position,
wherein, in the second position of the actuation element (126), the hold-up plate (178) is mounted in the manual control device (112) to prevent movement of the actuation element (126) from the second position, and
wherein, in the first position of the actuation element (126), the adapter plate (134) is mounted in the manual control device (112) such that the distance between the non-deflected magnetic position element (152) of the actuation element (126) and the magnetic field sensor unit (156) is greater than the distance when the hold-up plate (178) is mounted.

4. The manual control device (112) in accordance with claim 1 or 2, comprising a first mechanical lock integrated in the actuation element (126) configured to lock the actuation element (126) in the second position and release the actuation element (126) in the first position such that the distances between the non-deflected magnetic position element (152) of the actuation element (126) and the magnetic field sensor unit (156) are different in the first position of the actuation element (126) and in the second position of the actuation element (126).

5. The manual control device (112) in accordance with any of the preceding claims, wherein the actuating unit (120) comprises a manually unlatchable locking device (128) which, in the non-actuated state, prevents the actuation element (126) from being moved.

6. The manual control device (112) in accordance with claim 5, comprising a guide (170) which cooperates with the manually unlatchable locking device (128) and is movable relative to the actuation element (126) in the actuated state of the manually unlatchable locking device (128), wherein the manually unlatchable locking device (128) comprises:
a rod (164) comprising a tapering lower end (164a) arranged in the region of the guide (170), wherein the rod (164) is arranged to be movable in a guide pipe (140b) of the actuation element (126) received in the guide (170), and
one or several balls (174) arranged between an inner wall of the guide (170) and the rod (164), wherein the inner wall of the guide (170) comprises one or several recesses (170c) for partly receiving the balls (174), and wherein the guide pipe (140b) comprises one or several holes (176) for partly receiving the balls (174).

7. The manual control device (112) in accordance with claim 6, wherein:
in the non-actuated state of the manually unlatchable locking device (128), the non-tapering part (164a) of the rod (164) is arranged in the region of the holes (176) such that a ball (174) is partly arranged in a hole (176) and extends into a recess (170c) in the guide (170) such that movement of the guide (170) and, thus, of the actuation element (126) is not possible, and
in the actuated state of the manually unlatchable locking device (128), the tapering part (164a) of the rod (164) is arranged in the region of the holes (176) such that a ball (174) is partly arranged in a hole (176) and extends into the guide pipe (140b) such that movement of the guide (170) and, thus, of the actuation element (126) is possible.

8. The manual control device (112) in accordance with any of the preceding claims, comprising a bellows (130), the bellows (130) comprising a basically cylindrical shape.

9. A control and operating unit (110) comprising a manual control device (112) in accordance with any of the preceding claims.

10. A lifting work platform (100), work machine or construction machine comprising a control and operating unit (110) in accordance with claim 9.

## Revendications

1. Emetteur de commande manuelle (112) pour une unité de commande et de manipulation (110) d'une plate-forme de travail en hauteur (100), machine de travail ou engin de chantier, avec:
au moins une unité d'actionnement (120) qui comporte un élément d'actionnement (126) qui présente au moins un élément de positionnement magnétique (152); et
une unité d'évaluation (154) qui comporte au moins une unité de capteur de champ magnétique (156),
dans lequel l'unité d'évaluation (154) est conçue pour détecter, sur base d'un signal de capteur de l'unité de capteur de champ magnétique (156), une position et/ou un mouvement de l'élément d'actionnement (126) dans un plan de mouvement,
dans lequel l'élément d'actionnement (126) est mobile par rapport à l'unité de capteur (156) dans une autre direction de mouvement perpendiculaire au plan de mouvement, et
dans lequel l'unité d'évaluation (154) est conçue pour détecter un mouvement de l'élément d'actionnement (126) dans l'autre direction de mouvement sur base d'un signal de capteur de l'unité de capteur de champ magnétique (156),
**caractérisé par le fait que**
l'élément d'actionnement (126) peut être commuté entre une première position dans laquelle le mouvement est permis dans l'autre direction de mouvement, et une deuxième position dans laquelle le mouvement dans l'autre direction de mouvement n'est pas possible, et
l'unité d'évaluation (154) est conçue pour détecter, sur base d'un signal de capteur de l'unité de capteur de champ magnétique (156), la première position ou la deuxième position de l'élément d'actionnement (126).

2. Emetteur de commande manuelle (112) selon la revendication 1, dans lequel les distances de l'élément de positionnement magnétique non déployé (152) de l'élément d'actionnement (126) de l'unité de capteur de champ magnétique (156) dans la première position de l'élément d'actionnement (126) et dans la deuxième position de l'élément d'actionnement (126) sont différentes.

3. Emetteur de commande manuelle (112) selon la revendication 1 ou 2, avec une plaque d'adaptation (134) et une plaque de retenue antagoniste (178) dont l'une est montée dans l'émetteur de commande manuelle (112) en fonction du fait que l'élément d'actionnement (126) se trouve dans la première position ou dans la deuxième position,
dans lequel, dans la deuxième position de l'élément d'actionnement (126), la plaque de retenue antagoniste (178) est montée dans l'émetteur de commande manuelle (112) pour empêcher un mouvement de l'élément d'actionnement (126) hors de la deuxième position, et
dans lequel, dans la première position de l'élément d'actionnement (126), la plaque d'adaptation (134) est montée dans l'émetteur de commande manuelle (112) de sorte que la distance de l'élément de positionnement magnétique non déployé (152) de l'élément d'actionnement (126) de l'unité de capteur de champ magnétique (156) soit supérieure à la distance en cas de plaque de retenue antagoniste montée (178).

4. Emetteur de commande manuelle (112) selon la revendication 1 ou 2, avec un premier moyen de blocage mécanique intégré dans l'élément d'actionnement (126) qui est conçu pour bloquer l'élément d'actionnement (126) dans la deuxième position et pour dégager l'élément d'actionnement (126) dans la première position, de sorte que les distances de l'élément de positionnement magnétique non déployé (152) de l'actionneur (126) de l'unité de capteur de champ magnétique (156) dans la première position de l'élément d'actionnement (126) et dans la deuxième position de l'élément d'actionnement (126) soient différentes.

5. Emetteur de commande manuelle (112) selon l'une des revendications précédentes, dans lequel l'unité d'actionnement (120) présente un dispositif de blocage pouvant être déverrouillé manuellement (128) qui, à l'état non actionné, empêche un mouvement de l'élément d'actionnement (126).

6. Emetteur de commande manuelle (112) selon la revendication 5, avec un guide (170) qui coopère avec le dispositif de blocage pouvant être déverrouillé manuellement (128) et qui, à l'état actionné du dispositif de blocage pouvant être déverrouillé manuellement (128), est mobile par rapport à l'élément d'actionnement (126), dans lequel le dispositif de blocage pouvant être déverrouillé manuellement (128) comporte:
une tige (164) avec une extrémité inférieure effilée (164a) qui est disposée à l'endroit du guide (170), la tige (164) étant disposée de manière mobile dans un tube de guidage (140b) de l'élément d'actionnement (126) reçu dans le guide (170), et
une ou plusieurs billes (174) qui sont disposées entre une paroi intérieure du guide (170) et la tige (164), où la paroi intérieure du guide (170) présente un ou plusieurs évidements (170c) destinés à recevoir partiellement les billes (174), et où le tube de guidage (140b) présente un ou plusieurs trous (176) destinés à recevoir partiellement les billes (174).

7. Emetteur de commande manuelle (112) selon la revendication 6, dans lequel
à l'état non actionné du dispositif de blocage pouvant être déverrouillé manuellement (128), la partie non effilée (164a) de la tige (164) est disposée à l'endroit des trous (176), de sorte qu'une bille (174) soit disposée partiellement dans un trou (176) et s'étende dans un évidement (170c) dans le guide (170), de sorte qu'un mouvement du guide (170) et, de ce fait, de l'élément d'actionnement (126) ne soit pas possible, et
à l'état actionné du dispositif de blocage pouvant être déverrouillé manuellement (128), la partie effilée (164a) de la tige (164) est disposée à l'endroit des trous (176), de sorte qu'une bille (174) soit disposée partiellement dans un trou (176) et s'étende dans le tube de guidage (140b), de sorte qu'un mouvement du guide (170) et, de ce fait, de l'élément d'actionnement (126) soit possible.

8. Emetteur de commande manuelle (112) selon l'une des revendications précédentes, avec un soufflet (130), dans lequel le soufflet (130) présente une forme sensiblement cylindrique.

9. Unité de commande et de manipulation (110) avec un émetteur de commande manuelle (112) selon l'une des revendications précédentes.

10. Plate-forme de travail en hauteur (100), machine de travail ou engin de chantier avec une unité de commande et de manipulation (110) selon la revendication 9.
